Europäisches Patentamt

European Patent Office

Office européen des brevets

(19)

(11) Veröffentlichungsnummer : **0 326 976 B1**

(12)

# EUROPÄISCHE PATENTSCHRIFT

(45) Veröffentlichungstag der Patentschrift :
08.04.92 Patentblatt 92/15

(51) Int. Cl.$^5$ : **C04B 35/26, C01G 49/02**

(21) Anmeldenummer : **89101496.1**

(22) Anmeldetag : **28.01.89**

(54) **Verfahren zur Herstellung hexagonaler Ferrite.**

(30) Priorität : **05.02.88 DE 3803467**

(43) Veröffentlichungstag der Anmeldung :
**09.08.89 Patentblatt 89/32**

(45) Bekanntmachung des Hinweises auf die
Patenterteilung :
**08.04.92 Patentblatt 92/15**

(84) Benannte Vertragsstaaten :
**DE FR GB NL**

(56) Entgegenhaltungen :
**EP-A- 0 136 599**
**EP-A- 0 276 765**
**US-A- 3 542 685**

(73) Patentinhaber : **BASF Aktiengesellschaft**
**Carl-Bosch-Strasse 38**
**W-6700 Ludwigshafen (DE)**

(72) Erfinder : **Mair, Gunther, Dr.**
**Corneliusstrasse 15**
**W-6800 Mannheim 25 (DE)**
Erfinder : **Ohlinger, Manfred, Dr.**
**Anselm-Feurbach-Strasse 13**
**W-6710 Frankenthal (DE)**
Erfinder : **Feser, Rainer, Dr.**
**Colgensteiner Weg 25**
**W-6718 Gruenstadt (DE)**

## Beschreibung

Die Erfindung betrifft ein Verfahren zur Herstellung kobalt- und zinnhaltiger, hexagonaler Ferrite nach dem Glasverfahren bei dem ein Feststoff, bestehend aus einem homogenen Gemisch der ferritbildenden Kationen und wenigstens einem thermisch zersetzlichen Anion sowie einer als Glasbildungssubstanz wirkenden Borverbindung, bei 600 bis 1000°C gesintert und der dabei gebildete Ferrit anschließend durch Auflösen der Glasmatrix abgetrennt wird.

Hexagonale Ferrite mit sehr unterschiedlicher Zusammensetzung finden als magnetische Materialien auf vielen Gebieten Verwendung. Während sie früher vorwiegend zur Herstellung von Permanentmagneten eingesetzt wurden, sind sie seit einiger Zeit auch für die Herstellung von magnetischen Speichermaterialien von Interesse. Dabei spielen neben den magnetischen Eigenschaften, wie Koerzitivfeldstärke und Sättigungsmagnetisierung, vor allem die Teilchenform, die Teilchengröße, die möglichst einheitliche Teilchengrößenverteilung sowie die leichte Aufteilbarkeit der Teilchenagglomerate eine wesentliche Rolle.

Die Herstellung hexagonaler Ferrite, insbesondere substituierter Ferrite vom Barium-, Strontium- oder Bleiferrit-Typ ist bekannt. Sie erfolgt u.a. nach dem keramischen Verfahren. Dazu werden meist Barium- oder Strontiumkarbonat, Eisenoxid sowie Verbindungen der weiteren Elemente in dem Verhältnis, das der chemischen Formel des späteren Ferrits entspricht, gemischt und diese Mischung bei Temperaturen bis zu 1300°C gesintert. Das entstandene Produkt wird anschließend, meist unter Zusatz von Wasser, zu einem Pulver gemahlen. Diese Aufarbeitung bewirkt jedoch eine starke Verbreiterung des Teilchengrößenspektrums, was sich auf die magnetischen Eigenschaften, insbesondere auf die Einheitlichkeit der Schaltfeldstärke in nicht unerheblichem Maße nachteilig auswirkt.

Weiterhin sind zur Herstellung der genannten Ferrite Fluxverfahren bekannt, bei denen Flußmittel zur Förderung der Reaktion zwischen den einzelnen Metalloxiden eingesetzt werden, wie z.B. Alkalihalogenide und -sulfate. So wird nach der US-A 3 793 443 Bariumferrit durch Erhitzen eines $BaCO_3$-FeOOH-NaCl-KCl-Gemen-ges hergestellt. In ähnlicher Weise wird gemäß US-A 4 401 643 vorgegangen. Dort werden zur Herstellung von Bariumferrit die löslichen Chloride der Metallkomponenten mit Natriumkarbonat ausgefällt und nach dem Trocknen in Gegenwart des dabei gebildeten Natriumchlorids gesintert. Bei diesen Alkalichlorid- und Alkalisulfatfluxver fahren werden Salz-Ferrit-Gemenge als kompakte, massive und harte Schmelzkuchen erhalten, deren Salzanteil anschließend zur Isolierung des Ferrits durch Aufschlämmen in Wasser aufgelöst wird. Nachteilig an diesen Verfahren ist die teilweise hohe Schmelztemperatur. Außerdem sind die resultierenden Ferritteilchen oft sehr grobteilig mit spezifischen Oberflächen von kleiner 20 m²/g.

Auf ähnliche Art werden Ferrite nach dem sogenannten Glasverfahren erhalten. Dazu werden Oxide der ferritbildenden Metalle zusammen mit einer Glasbildungssubstanz, z.B. Borate, Phosphate, Silikate, aufgeschmolzen, dann die Schmelze zu einem im wesentlichen nicht kristallinen Glas abgeschreckt, daraufhin die Glasmasse getempert, damit sich die ferritische Phase bilden kann und schließlich die Glassubstanz, z.B. mit einer schwachen Säure, aufgelöst, so daß die Ferritteilchen zurückbleiben (u.a. DE-A 2 026 736, US-A 4 569 775, EP-A 136 599). Diese Verfahren haben jedoch den Nachteil, daß sie sich sehr aufwendig gestalten und zum Aufschmelzen der Oxide sehr hohe Temperaturen erforderlich sind. Es ist auch schon vorgeschlagen worden, eine feste Mischung aus Salzen der den Ferrit bildenden Kationen mit einer Glaskomponente herzustellen und nach einem Sintervorgang durch Herauslösen der Glaskomponenten den Ferrit zu gewinnen.

Aufgabe der Erfindung war es, ein Verfahren zur Herstellung hexagonaler Ferrite bereitzustellen, welche sich durch eine spezielle Modifizierung mit zwei- und mehrwertigen Ionen auszeichnen, so daß nicht nur eine hohe Sättigungsmagnetisierung bei einer auf Werte zwischen 30 und 150 kA/m begrenzten Koerzitivfeldstärke zu erreichen sind, sondern daß insbesondere die Abhängigkeit der Koerzitivfeldstärke von der Temperatur sehr gering ist. Eine weitere wesentliche Eigenschaft der aufgabengemäß herzustellenden Ferrite muß eine geringe Schaltfeldverteilung bei kleinem Teilchendurchmesser sein.

Es wurde nun gefunden, daß sich hexagonale Ferrite mit den aufgabengemäß geforderten Eigenschaften herstellen lassen, wenn ein Feststoff, bestehend aus einem homogenen Gemisch der Kationen der Zusam-mensetzung I

$$ACo_bM_c(Sn^{4+})_d(N^{a+})_e(Fe^{3+})_f[A_gB]_h \quad (I)$$

in der

A = Ba, Sr, Pb

M = Zn, $Fe^{2+}$, Mn

N = Ti, Zr, V, Nb

B = Bor

a = 3, 4, 5

$0,1 \leqq b \leqq 1,0$

$0,1 \leqq c \leqq 1,5$

$0,05 \leqq d \leqq 1,5$
$0 \leqq e \leqq 1,5$
$9 \leqq f \leqq 20$
$0,1 \leqq g \leqq 3$
$0,05 \leqq h \leqq 10$

bedeuten, und wenigstens einem Anion aus der Gruppe der Nitrate, Carbonate, Formiate, Acetate und Hydroxide, bei einer Temperatur von 600 bis 1000°C gesintert und der dabei gebildete Ferrit durch Auflösen der Glasmatrix abgetrennt wird.

Die Herstellung des erfindungsgemäß eingesetzten Feststoffs, der aus der Mischung der Kationen der Zusammensetzung I und wenigstens einem Anion aus der Gruppe der Nitrate, Carbonate, Formiate, Acetate und Hydroxide besteht, wird so durchgeführt, daß zuerst die löslichen Salze aus den genannten Kationen und Anionen in der für den vorgesehenen hexagonalen Ferrit erforderlichen Zusammensetzung sowie ein zusätzlicher Anteil des A-Kations, im allgemeinen Bariumionen, in Wasser gelöst und mittels einer Base, z.B. von NaOH und/oder $Na_2CO_3$, ausgefällt werden, dann der Niederschlag abgetrennt und gewaschen und schließlich in einer Lösung von Borsäure dispergiert wird. Aus dieser Dispersion wird das Wasser, z.B. durch Sprühtrocknung, entfernt. Der daraus resultierende Feststoff besteht aus agglomerierten Teilchen und enthält außer den angegebenen Anionen alle Bestandteile des vorgesehenen hexagonalen Ferrits zusammen mit einer M-Borat-Glaskomponente. In einer zweckmäßigen Ausgestaltung wird die Mischung der Salze unmittelbar zur Trockene gebracht und getempert.

Wird nun dieser Feststoff bei 600 bis 1000°C, insbesondere bei 700 bis 900°C gesintert, dann bilden sich die gewünschten Ferritteilchen in einer amorphen Glasmatrix. Durch das beim Glasverfahren übliche Auflösen der Glasmatrix mittels schwacher Säuren, wie z.B. Essigsäure, werden die Ferritteilchen freigelegt und können durch Filtration abgetrennt werden.

Beim Einsatz von Titan als Bestandteil des Feststoffs kann es vorteilhaft sein, organische Lösungen von Titantetrachlorid in Konzentrationen von unter 50 Vol.%, im allgemeinen von 10 bis 30 Vol.%, einzusetzen. Als Borkomponente wird üblicherweise Borsäure verwendet, doch lassen sich auch andere Borverbindungen, wie z.B. Borax, heranziehen.

Besonders vorteilhafte, gemäß dem erfindungsgemäßen Verfahren erhaltene Ferrite sind z.B. hexagonale Ferrite vom M-Typ mit einem relativ hohen Gehalt an M, wie $BaCo_{0,1}Zn_{1,0}Ti_{0,9}Sn_{0,2}Fe_{9,8}O_x$, aber auch Ferrite mit $b+c \neq d+e$, wie $BaCo_{0,5}Zn_{0,3}Ti_{0,7}Sn_{0,2}Fe_{10,4}O_x$ oder $BaCo_{0,5}Zn_{0,4}Ti_{0,6}Sn_{0,2}Fe_{10,4}O_x$. x ist jeweils so gewählt, daß Elektronenneutralität herrscht.

Mit dem Feststoff steht ein auf einfache und kostengünstige Weise erhältliches Ausgangsmaterial für die erfindungsgemäßen Herstellung der hexagonaler Ferrite zur Verfügung, mit welchem sich dann die entsprechenden Ferrite mit einer durch die entsprechende Substitution bereits im Feststoff vorher einstellbaren Koezitivfeldstärke, einer geringen und insbesondere einheitlichen Teilchengröße von unter 0,2 μm, vorzugsweise von unter 0,1 μm, sowie einer wegen der guten Kristallinität hohen Sättigungsmagnetisierung erhalten lassen. Diese Ferrite lassen sich in vorteilhafter Weise als magnetische Materialien bei der Herstellung von magnetischen Aufzeichnungsträgern einsetzen. Ihre besondere Eignung hierfür ergibt sich neben den bereits genannten Vorteilen vor allem aus der geringen Temperaturabhängigkeit der Koerzitivfeldstärke.

Die magnetischen Werte der Ferrite wurden in einem Schwingmagnetometer bei einer Feldstärke von 380 kA/m gemessen, und zwar die Koerzitivfeldstärke $H_c$ in [kA/m] sowie die spezifische Sättigungsmagnetisierung $M_{m/\rho}$ in [nTm$^3$/g]. Die spezifische Oberfläche nach BET wurde gemäß DIN 66 132 mittels eines Ströhlein-Areameters der Fa. Ströhlein, Düsseldorf, BRD, nach dem Einpunkt-Differenz-Verfahren nach Haul und Dümbgen bestimmt. Die Größe der Temperaturabhängigkeit der Koerzitivfeldstärke wird als VH$_c$30 angegeben und ergibt sich aus der Differenz der Koerzitivfeldstärken bei 40°C und 20°C dividiert durch die Temperaturdifferenz von 20°C. Außerdem wurde noch die Schaltfeldstärkenverteilung SFD nach Williams und Comstock (AIP Conf. Proc. 5 (1971) 738) gemessen.

Vergleichsversuch

Titantetrachlorid und Borsäure sowie die Nitrate der für die Zusammensetzung $BaCo_{0,8}Ti_{0,8}Fe_{10,4}(BaB_{1,4})_{3,75}$ nötigen Kationen wurden in Wasser gelöst und anschließend sprühgetrocknet. Danach wurde der Feststoff 30 Minuten bei 800°C getempert. Dabei bildete sich ein Stoff der Zusammensetzung $BaCo_{0,8}Ti_{0,8}Fe_{10,4}O_x \times 3,75(BaB_{1,4}O_{3,1})$, aus dem die Glaskomponente $BaB_{1,4}O_{3,1}$ durch Essigsäure herausgelöst wurde, so daß die kristallinen Ferritteilchen abgetrennt werden konnten. Die Meßergebnisse sind in der Tabelle angegeben.

Beispiel 1

Es wurde wie im Vergleichsversuch beschrieben vorgegangen, jedoch wurden die Ausgangsmaterialien so gewählt, daß nach sechsstündigem Tempern des Salzgemisches bei 750°C und Auflösen der Glasmatrix ein Ferrit der Zusammensetzung $BaCo_{0,1}Zn_{1,0}Ti_{0,9}Sn_{0,2}Fe_{9,8}O_x$ gewonnen wurde. Die Meßergebnisse sind in der Tabelle angegeben.

Beispiel 2

Es wurde wie im Vergleichsversuch beschrieben vorgegangen, jedoch wurden die Ausgangsmaterialien so gewählt, daß nach zweistündigem Tempern des Salzgemisches bei 850°C und Auflösen der Glasmatrix ein Ferrit der Zusammensetzung $BaCo_{0,5}Zn_{0,3}Ti_{0,7}Sn_{0,2}Fe_{10,4}O_x$ gewonnen wurde. Die Meßergebnisse sind in der Tabelle angegeben.

Beispiel 3

Es wurde wie im Vergleichsversuch beschrieben vorgegangen, jedoch wurden die Ausgangsmaterialien so gewählt, daß nach zweistündigem Tempern des Salzgemisches bei 750°C und Auflösen der Glasmatrix ein Ferrit der Zusammensetzung $BaCo_{0,5}Zn_{0,4}Ti_{0,6}Sn_{0,2}Fe_{10,4}O_x$ gewonnen wurde. Die Meßergebnisse sind in der Tabelle angegeben.

Tabelle

|  | $H_c$ | $M_{m/\varrho}$ | SFD | Durch-messer [$\mu$m] | BET | $VH_c$ 30 |
|---|---|---|---|---|---|---|
| Vergleichs-versuch | 69 | 58 | 0,39 | 0,08 - 0,2 | 35 | 0,37 |
| Beispiel 1 | 89 | 52 | 0,35 | 0,05 | 24 | 0,05 |
| Beispiel 2 | 79 | 63 | 0,47 | 0,08 | 21 | 0,23 |
| Beispiel 3 | 80 | 63 | 0,51 | 0,1 | 28 | 0,08 |

**Patentansprüche**

1. Verfahren zur Herstellung hexagonaler Ferrite, dadurch gekennzeichnet, daß ein Feststoff, bestehend aus einem homogenen Gemisch der Kationen der Zusammensetzung I

$$ACo_bM_c(Sn^{4+})_d(N^{a+})_e(Fe^{3+})_f[A_gB]_h \quad (I)$$

in der
A = Ba, Sr, Pb
M = Zn, $Fe^{2+}$, Mn
N = Ti, Zr, V, Nb
B = Bor
a = 3, 4, 5
$0,1 \leqq b \leqq 1,0$
$0,1 \leqq c \leqq 1,5$
$0,05 \leqq d \leqq 1,5$
$0 \leqq e \leqq 1,5$
$9 \leqq f \leqq 20$
$0,1 \leqq g \leqq 3$

0,05 $\leq$ h $\leq$ 10
bedeuten, und wenigstens einem Anion aus der Gruppe der Nitrate, Carbonate, Formiate, Acetate und Hydroxide, bei einer Temperatur von 600 bis 1000°C gesintert und der dabei gebildete Ferrit durch Auflösen der Glasmatrix abgetrennt wird.

## Claims

1. A process for the preparation of a hexagonal ferrite, wherein a solid consisting of a homogeneous mixture of the cations of the composition I

$$ACo_b M_c (Sn^{4+})_d (N^{a+})_e (Fe^{3+})_f [A_g B]_h \quad (I)$$

where A is Ba, Sr or Pb,
M is Zn, $Fe^{2+}$ or Mn,
N is Ti, Zr, V or Nb,
B is boron,
a is 3, 4 or 5,
$0.1 \leq b \leq 1.0$,
$0.1 \leq c \leq 1.5$,
$0.05 \leq d \leq 1.5$,
$0 \leq e \leq 1.5$,
$9 \leq f \leq 20$,
$0.1 \leq g \leq 3$ and
$0.05 \leq h \leq 10$,
and one or more anions from the group consisting of the nitrates, carbonates, formates, acetates and hydroxides are sintered at from 600 to 1000°C and the ferrite formed is isolated by dissolving the glass matrix.

## Revendications

1. Procédé de préparation de ferrites hexagonaux caractérisé par le fait qu'on fritte, à une température de 600 à 1000 degrés C, une matière solide constituée d'un mélange homogène des cations de la composition suivante :

$$Aco_b m_c (sn^{4+})_d (N^{a+})_e (Fe^{3+})_f [A_g B]_h \quad (I)$$

dans laquelle
A = Ba, Sr, Pb
M = Zn, $Fe^{2+}$, Mn
N = Ti, Zr, V, Nb
B = Bor
a = 3, 4, 5
$0,1 \leq b \leq 1,0$
$0,1 \leq c \leq 1,5$
$0,05 \leq d \leq 1,5$
$0 \leq e \leq 1,5$
$9 \leq f \leq 20$
$0,1 \leq g = 3$
$0,05 \leq h \leq 10$
et d'au moins un anion du groupe des nitrates, carbonates, formiates, acétates et hydroxydes et le ferrite ainsi obtenu est séparé par dissolution de la matrice vitreuse.